Europäisches Patentamt

European Patent Office

Office européen des brevets

(11) Publication number: **0 215 122**
A1

# EUROPEAN PATENT APPLICATION

published in accordance with Art. 158(3) EPC

(21) Application number: 85901074.6

(22) Date of filing: 25.02.85

Data of the international application taken as a basis:

(86) International application number:
PCT/JP 85/00084

(87) International publication number:
WO 86/04844 (28.08.86 86/19)

(51) Int. Cl.⁴: **B 23 K 3/00**, B 23 K 3/06

(43) Date of publication of application: 25.03.87
Bulletin 87/13

(71) Applicant: KAWAGUCHI, Seiji, 22-203, Nishiminecho 21, Otaku Tokyo 146 (JP)

(72) Inventor: KAWAGUCHI, Seiji, 22-203, Nishiminecho 21, Otaku Tokyo 146 (JP)

(84) Designated Contracting States: DE FR GB

(74) Representative: Lorenz, Werner, Dipl.-Ing., Fasanenstrasse 7, D-7920 Heidenheim (DE)

(54) **AUTOMATIC SOLDERING METHOD AND APPARATUS.**

(57) An automatic soldering method and apparatus, which are capable of carrying out with a high accuracy and a high efficiency a point soldering operation using a wire solder (14) with respect to a work surface. The soldering method consists of the steps of lowering a soldering trowel (12) toward a work surface (4, 72) by an air cylinder (9), carrying out a primary solder feeding operation by extending a wire solder (14) to a position a little lower than the soldering trowel simultaneously with the air cylinder lowering operation, melting this wire solder with a free end portion of the soldering trowel (12), wetting the free end portion of the soldering trowel (12), bringing the soldering trowel (12) into contact with the work surface (4, 72) to wet the same as well while heating the same, and carrying out a secondary solder feeding operation by extending the wire solder (14) again toward the free end of the soldering trowel (12).

⊢

SPECIFICATION

Title of the Invention

A Method of Automatic Soldering and a Device Therefor

Field of the Invention

The present invention relates to a method of automatic soldering and a device therefor for improving the precision and efficiency of soldering operation, especially in point soldering which employs thread solder.

Background of the Invention

Soldering has conventionally been done manually in most of the cases because soldering conditions vary greatly in each case. A device which meets such diversified requirements would inevitably become complicated and large in size. Moreover, merits of automatized soldering device are not fully appreciated in certain areas. In such areas they manage to do soldering works manually.

On the other hand, it is quite difficult to obtain uniform soldering with excellent luster finish. Need for automatic soldering device which can replace the manual operations was mounting, particularly in industries relating to products of greater added value.

The present inventor has found that the above requirements can be met by soldering which comprises the steps of vertically moving a soldering iron by means of an air cylinder, supplying a given amount of thread-like solder from a solder feeder installed separately at a timing synchronized with said vertical movement, controlling the preheating and heating times and dividing the supply of thread solder into two portions as primary and secondary feeds. The present invention method and device has been contrived based on the above finding.

Disclosure of the Invention

The method of automatic soldering (first invention) of the present invention was contrived to achieve the above objects and comprises the steps of lowering a soldering iron toward the surface to be worked by means of an air cylinder, controlling the preheating and the heating times of the iron, and supplying thread solder toward the soldering iron in a predetermined amount from a solder feeder installed separately in two steps as primary and secondary feeds at a timing synchronized with lowering of the iron. The present invention method is characterized in that during said primary feed, the thread solder is projected slightly below the iron so that it can be melted to wet the tip of the iron and heat the work surface while the iron is being lowered. The method is further characterized in that during said secondary feed, the thread solder is supplied directed toward the tip of the soldering iron which is wet from the primary feeding so that the solder can be placed on the work surface.

The automatic soldering device (second invention) of the present invention comprises an air cylinder which is mounted on a first base which is freely positioned in height relative to the work surface, a second base which is mounted on a vertically movable rod of said air cylinder, said second base having a soldering iron which can be adjusted in its position vertically and holder which supports a thread solder feeding tube whose end portion acting as a solder nozzle in such a manner that they are retained near and directed toward the end portion of the soldering iron, said holder further retaining an adjustment means for the primary solder feed position which adjusts the vertical position of the solder nozzle relative to the end portion of the soldering iron so as to supply the thread solder at a location slightly below the end portion of the iron. The device further comprises an adjustment means for the position of secondary solder feeding which enables the thread solder to be supplied at the end portion of the iron.

Brief Description of the Drawings

Fig. 1 is an overall schematic perspective view of the automatic soldering device according to the present invention.

Fig. 2 is an overall schematic front view to show the connection of the components of the automatic soldering system shown in Fig. 1.

Fig. 3 is an enlarged front view of a soldering iron unit at its tip (the bottom portion).

Fig. 4 is a view to explain the operation of the tip of the soldering iron unit shown in Fig. 3.

Figs. 5(A) through 5(E) show the position of the soldering iron tip relative to thread solder to be supplied thereto in the soldering device shown in Figs. 1 through 4 respectively.

Fig. 6 is a front view of another embodiment of a

soldering iron unit.

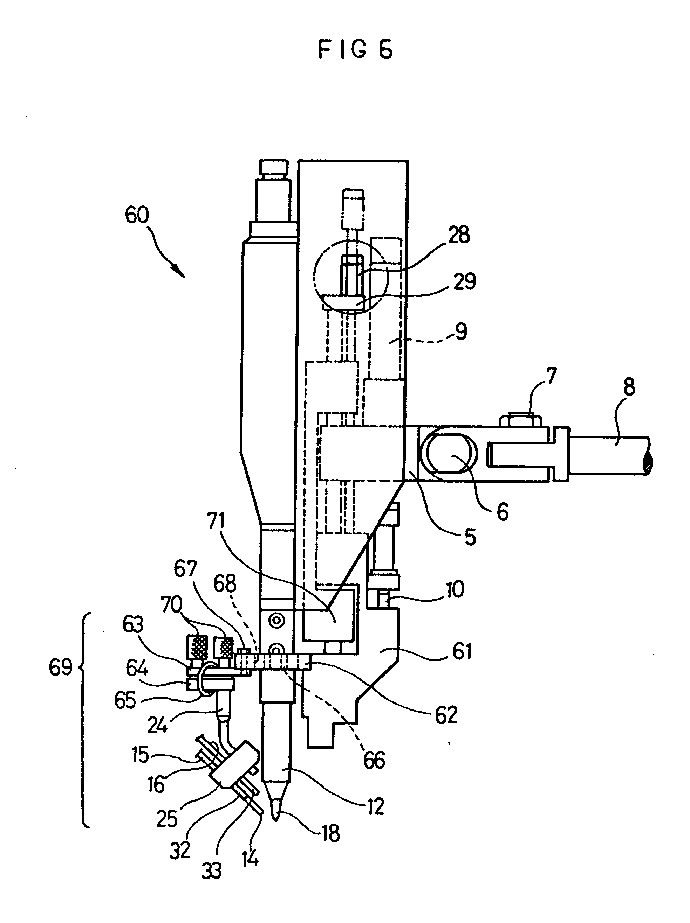

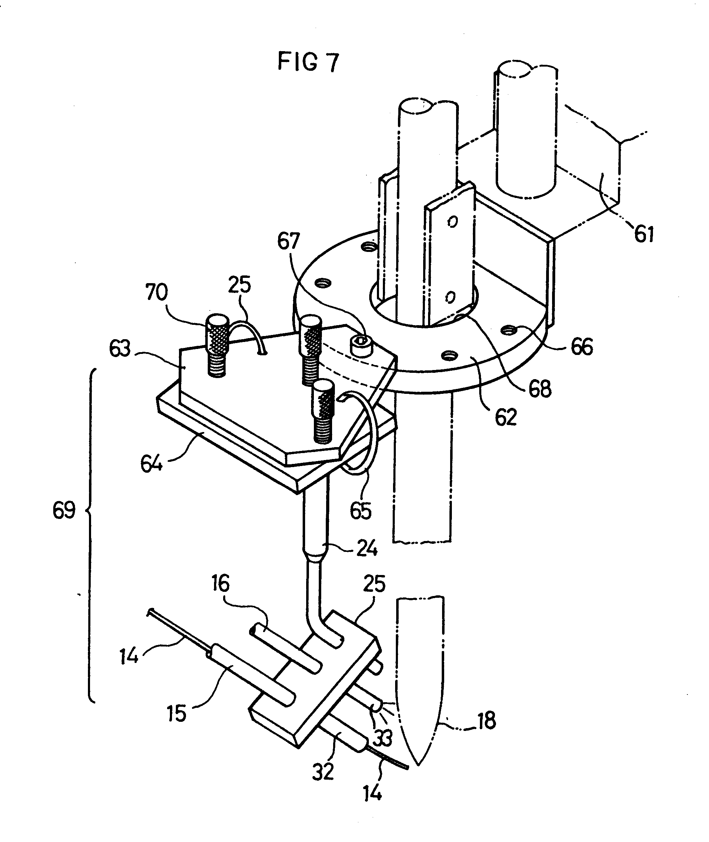

And, Fig. 7 is an enlarged perspective view of the soldering unit at its tip (the bottom portion) shown in Fig. 6.

Preferred Embodiment of the Invention

The present invention will be described referring to the accompanying drawings. For the ease of explanation, the "device" according to the second invention will be described first with references being made to the first invention "method" as the need arises.

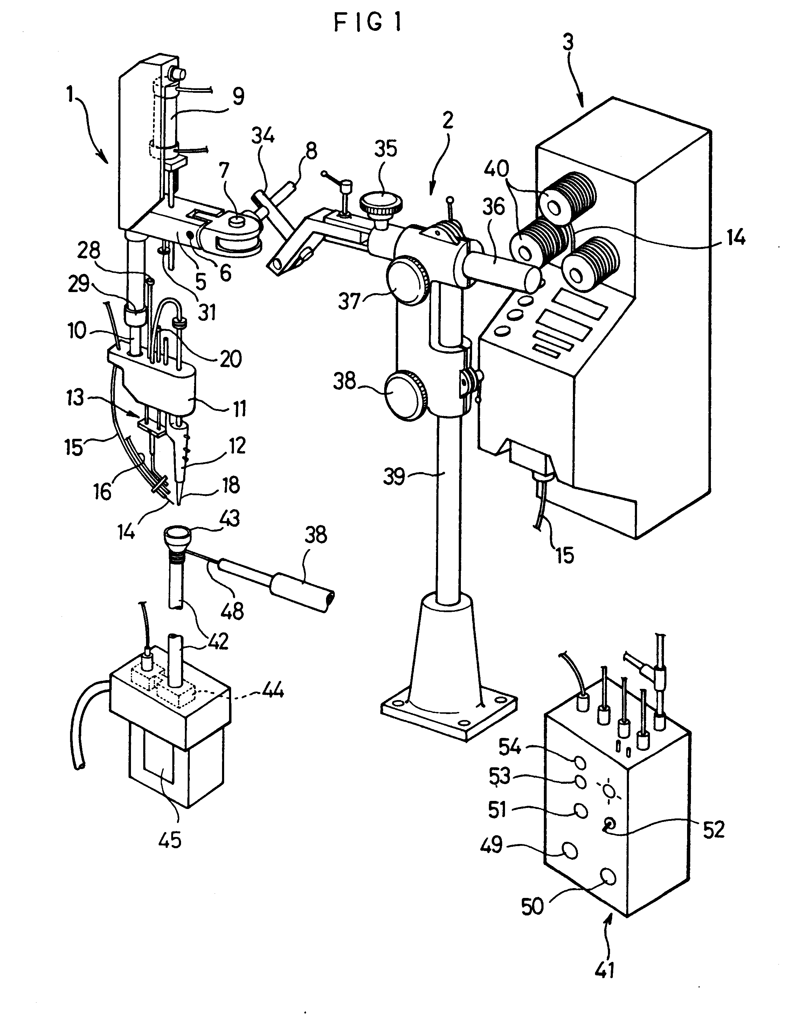

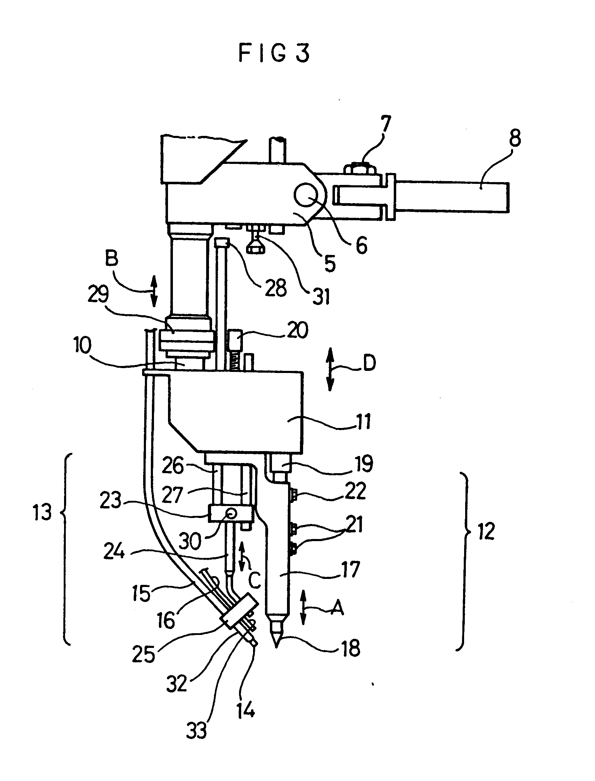

Figs. 1 through 5 show one embodiment of the present invention (first invention). The automatic soldering device in the drawings comprises mainly a soldering iron unit 1, a stand unit 2, a solder feeder 3 and a cleaner adjusting means 41, which will be described below consecutively.

[Soldering iron unit 1]

The soldering iron unit 1 has a first base 5 which can be arbitrarily positioned with respect to a work surface 4. A fixing arm 8 is attached to the end of the first base 5 with bolts 6 and 7, whereby the first base 5 can be supported by the stand unit 2 in a freely adjustable manner with respect to its vertical and horizontal positions.

Upon the upper portion of the first base 5 is erected an upright air cylinder 9, whose vertically movable rod 10 is attached with a second base 11 in substantially horizontal state. A soldering iron 12 whose position can be vertically adjusted is also attached to the second base 11 together with a feeding tube 15 for supplying a thread solder 14 and an air tube 16 for blowing sludges via a holder 13.

The soldering iron 12 includes a holder 17 for a solder tip 18 attached to the end (bottom) of the holder 17 and connected to a heater 19. The vertical position of the iron tip 18 relative to the second base 11 can be freely adjusted by a button 20 for adjusting the vertical position of the iron tip in the direction indicated by an arrow A. The reference numeral 21 denotes screws for fixing the iron tip and 22 a screw for fixing the heater respectively.

The holder 13 includes a holder plate 23, a holder rod 24 and an end holder 25. The holder plate 23 is retained as if suspended below the second base 11 via a support rod 26 and a guide rod 27. The end holder 25 is suspended slantingly from the holder plate 23 via the holder rod 24. The support rod 26 and the guide rod 27 penetrate through the second base 11. A stopper 28 as being an "adjustment-means for secondary solder feeding position" is attached at the top of the support rod 26 as an "adjustment-means for secondary solder feeding position." A lock nut 29 for adjusting the position of the secondary solder feed is provided on the rod 10 in a freely movable manner in the vertical direction as indicated by the arrow B, so as to stop the holder plate 23 from descending further by engaging with the stopper 28. The stopper 28 and the lock nut 29 form said "adjustment-means for secondary solder feeding position" which supply thread solder 14 to the soldering iron 12 at its tip.

As "an adjustment-means for the primary solder feeding position" which supplies the thread solder 14 to a position slightly below the tip of the soldering iron 12, a screw 30 is attached to the holder plate 23 in the holder 13, so that the suspending height of the holder rod 24 in suspension relative to the holder plate 23 can be freely adjusted in the direction indicated by an arrow C.

The reference numeral 31 denotes a bolt for adjusting the stroke which changes the stroke of the rod 10 to adjust the vertical position of the second base 11 relative to the first base 5 in the direction of an arrow D.

As mentioned above, the holder 13 supports the feeding tube 15 and the air tube 16 and further positions the ends of the feeding tube 15 and the air tube 16 near and directed toward the end of the soldering iron 12 (more specifically, at the end of the iron tip 18). Thus, the end holder 25 in the holder 13 supports the end portion of the feeding tube 15 to form a soldering nozzle 32 there. It also supports the end portion of the air tube 16 in the similar manner to form an air nozzle 33.

[Stand Unit 2] and [Solder Feeder 3]

The stand unit 2 is provided to support the soldering iron unit 1 of above construction at a given height with respect to the work surface 4 and comprises a mount 34 to support the mounting arm 8, a handle 35 for horizontal position adjustment, a side rod 36, a handle 37 for forward/backward adjustment, a handle 38 for vertical adjustment, and a pole 39. While supporting the soldering iron unit 1, the stand unit 2 can easily be adjusted in its position vertically, horizontally as well as in the direction nearing to and from the drawing sheet and is capable of micro-adjustment.

The solder feeder 3 supplies via the feeding tube 15 a predetermined amount of thread solder 14 to the soldering iron unit 1, more specifically the iron tip 18, by paying out the thread solder 14 convoluted with a bobbin 40.

[Cleaner Adjusting Means 41]

The end holder 25 supports the end portion (air nozzle) 33 of the air tube 16 in the same manner as the feeding tube 15. The air tube 16 is connected to a cleaner adjusting means 41 and injects "air" from the end portion (air nozzle) 33 toward the end of the iron tip 18. A sludge receiving port 43 connected to a vacuum hose 42 is provided opposing to the air tube 16 in a freely approachable manner with respect to the iron tip 18. The vacuum hose 42 is connected to a vacuum source (not shown) and enables a suction force to act in the proximity of the sludge receiving port 43 by opening/closing of a solenoid valve 44. Sludge blown off from the iron tip 18 by the air injected from the end portion 33 of the air tube 16 will be sucked and retained in a vacuum pot 45. The sludge receiving port 43 is fixed at the end of a rod 48 which can be moved fore and aft and be swang by an air cylinder 47 contained in a slide unit 46. When the iron tip 18 is soldering on the work surface 4, the sludge receiving port 43 recedes from the near portion of the work surface and when the iron tip 18 is not opposed to the work surface 4, then the port 43 can be moved near the tip 18.

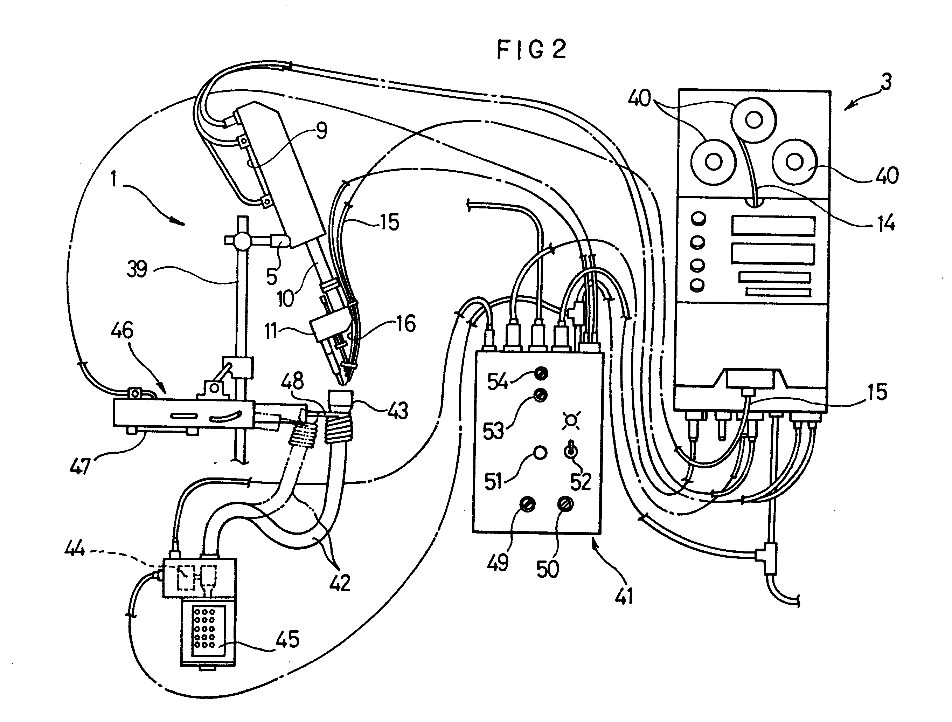

As shown in Figs. 1 and 2, the cleaner adjusting means 41 is provided with various buttons and switches. In the embodiment shown, there are provided a button 49 for adjusting the air injection timing, a button 50 for adjusting the length of air injection time, a start button 51, a switch 52 for the power source, a button 53 for adjusting the amount of air injection, and button 54 for adjusting the cylinder speed.

The operation of the automatic soldering device will now be described with reference made to the first invention method.

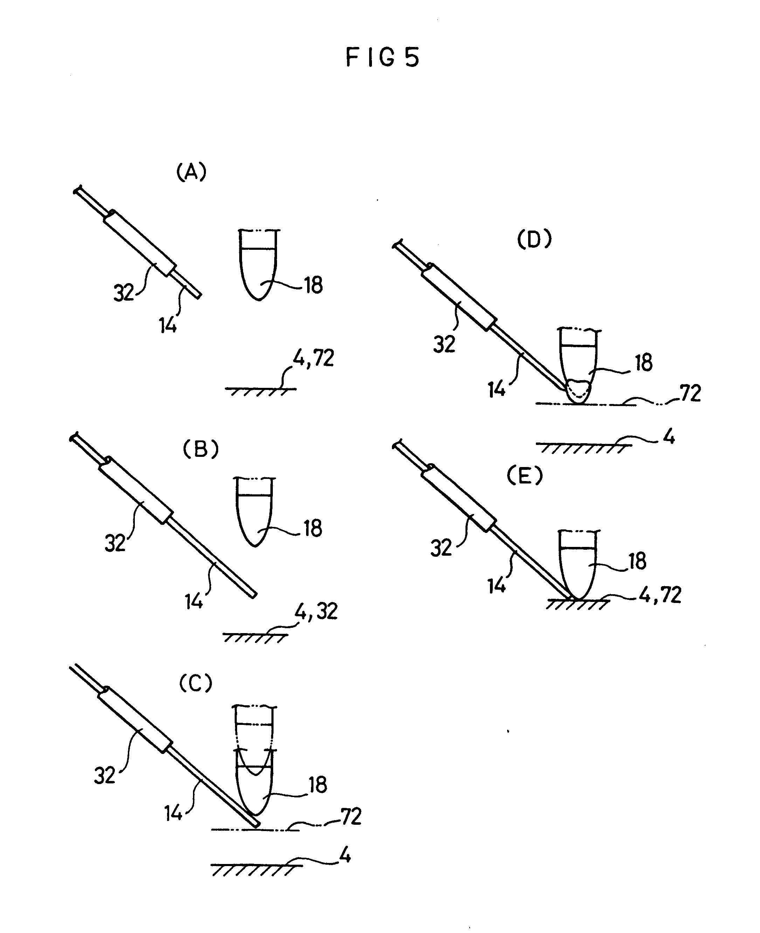

By actuating the air cylinder 9 of the soldering iron unit 1, the rod 10 will descend, and the second base 11 together with the soldering iron 12, the holder 13, the feeding tube 15, the air tube 16, etc. mounted thereon will also descend. The soldering iron 12 is therefore lowered toward the work surface 4 (Fig. 5 (A)) under this condition. The solder feeder 3 pays out the thread solder 14 from the bobbin 40 via the feeding tube 15 at a timing synchronized with the lowering of the soldering iron 12 in two steps of a given amount.

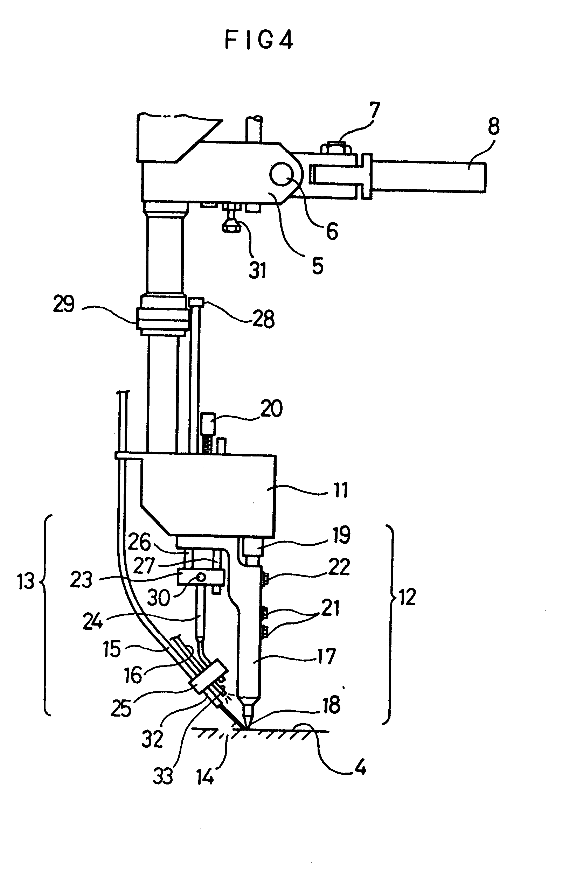

As the thread solder 14 is supplied from the solder nozzle 32 at the end of the feeding tube 15 directed toward the iron tip 18 in the primary solder feed, the thread solder 14 will project slightly below the iron tip 18 (Fig. 5 (B)), and the iron tip 18 touches the tip of the thread solder 14 as the soldering iron 12 continues to descend, thereby melting the thread solder 14 to wet the tip 18 with molten solder 14. (Figs. 5 (C), (D)). As the soldering iron 12 further descends and touches the work surface 4 to wet and to heat the surface with its tip 18 supply of the thread solder 14 resumes, or the secondary solder feed starts. As the thread solder 14 is supplied aiming at the end (iron tip 18) of the soldering iron 12 which is wet from the primary solder feed, the thread solder 14 projects aiming at the contact point between the iron tip 18 and the work surface 4. Since the iron tip 18 and the work surface 4 are wet from the primary solder, the solder will adhere extremely well on the work surface 4 (Figs. 4 and 5 (E)).

During the primary and secondary solder feeds, the feeding position of the thread solder 14 relative to the iron tip 18 becomes a crucial operating condition. In addition to controlling the preheating and heating times, said feeding position of the thread solder 14 is adjusted in advance by means of a bolt 31 for adjusting the stroke, the lock nut 29, a button 20 for adjusting the vertical position of the iron tip and the screw 30, etc.

In case excessive solder is adhereing to the iron tip 18 after predetermined soldering is completed, air is supplied under pressure to the air tube 16 at a timing and for a period of time controlled by the button 49 for adjusting the air injection timing and button 50 for adjusting the air injection time of the cleaner adjusting means 41. Since the air tube 16 is positioned near the iron tip 18 and oriented thereto at its end similarly to the tube 15, air comes out from the end portion (air nozzle) 33 and blows away the excessive solder or the sludge from the iron tip 18. At the same time, the solenoid valve 44 causes suction force to act near the sludge receiving port 43 via vacuum hose 42, so that blown and scattered sludge will be sucked into the sludge receiving port 43 and introduced into the vacuum pot 45 via the vacuum hose 42. Thus the iron tip 18 remains clean at all times.

Referring now to Figs. 6 and 7, another embodiment will be described.

Fig. 6 shows the second embodiment of the soldering iron unit 60. At its second base 61 is fixed a substantially annular first base plate 62 projecting horizontally. A second base plate 63 is screwed to the periphery of the first base plate 62 on the annular member thereof in a manner to allow positional veriation and projects horizontally. The holder plate 64 is positioned at and pressed against the bottom surface of the second base plate 63 by a spring 65. The first base plate 62 has plural holes 66 on its periphery so as to support and secure the second base plate 63 at any arbitrary position by means of screws 67. By suitably selecting the fixing holes 66, the holder plate 64, the end holder 25, the feeding tube 15 which is supported by these members and the air tube 16 may all be arbitrarily positioned around the iron tip 18. In this embodiment, the iron tip 18 is provided penetrating a throughhole 68 of the first base plate 62. The iron tip 18 is lowered by the air cylinder 9 to a certain position, and the holder 69 is lowered to a height in alignment with the position of the iron tip 18. The second base plate 63 is provided with three adjustment screws 70. The length of the adjustment screws 70 protruding downward from the base plate 63 determines the orientation of the holder plate 64 in all directions including horizontal, vertical and oblique, utilizing the resilienece of a screw 65 in the letter-C shape, whereby enabling adjustment of the solder nozzle 32 and the nozzle 33 for their vertical position relative to the iron tip 18.

It should be noted that the soldering iron 12 is connected at its top to a guide 71 provided on the second base 61.

In case it is difficult to correctly orient the solder tube 32 with respect to the work surface 4, the holder 69 as a whole with all its components can be moved to any arbitrary position in the proximity of the iron tip 18 by selecting a suitable fixing hole 66, from which position the thread solder 14 can be supplied in two steps to the iron tip 18 from the solder tube 32.

The operation of the soldering device according to the second embodiment will now be described in conjunction with the first invention method.

As the air cylinder 9 of the soldering iron unit 60 is actuated, the rod 10 will descend to lower the second base 61 together with the guide 71, soldering iron 12, holder 69, feeding tube 15 and air tube 16, etc. attached thereto. The soldering iron 12 is lowered in this manner orienting to the work surface 72. (Fig. 5 (A)). In the meantime, the solder feeder 3 supplies in two steps a predetermined amount of thread solder 14 paid out from the bobbin 40 at a timing synchronized with the lowering of the soldering iron 12.

As the thread solder 14 is paid out from the solder nozzle 32 at the end of the feeding tube 15 orienting to the iron tip 18 for the primary solder feed, the solder will project slightly below the iron tip 18 (Fig. 5 (B)) while the feeding tube 15 and the soldering iron 12 continue their descent. As the stopper 28 comes in contact with the lock nut 29, the feeding tube 15 (solder nozzle 32) stops lowering at a position where the tip of the thread solder 14 touches the work surface 72. However, the iron tip 18 continues to descend until the tip of the thread solder 14 becomes pressed between the iron tip 18 and the work surface 72. As a result, the solder is melted and wets both the end of the soldering iron, i.e. the iron tip 18 and the work surface 72 (Figs. 5 (C), (D)). At the same time the work surface 72 is heated.

The secondary solder feeding then follows. In other words, by supplying the thread solder 14 toward the end of the soldering iron 12 (iron tip 18) which is wet from the primary solder feed (Fig. 5 (E)), the solder from the secondary feed will adhere very well on the work surface 72 because of the wet iron tip 18 and the work surface 72.

By repeating the primary and secondary steps of solderings, automatic soldering becomes possible. Since the iron tip 18 becomes worn out and as it wears, its position (stroke) will be varied. In order to align the iron tip 19 and the thread solder 14, any one of the adjusting screws 70 (or each of them) is turned to change the position of the holder plate 64 at the bottom of the second base plate 63 against the pressing force of the spring 65. Thus, micro-adjustment for the optimum position becomes possible for the position of the iron tip 18, work surface 72 and thread solder 14. The remaining construction, operation and effect are substantially the same with the first embodiment; the same parts are denoted by the same reference numerals and duplicated explanation is omitted.

Applicability in the Industry

As has been described in the foregoing, the present invention enables alignment of the iron tip and the thread solder and greatly improves precision and efficiency of automatic soldering operation by feeding the solder in two portions as primary and secondary feeds. The present invention will therefore be very advantageously used in electronics products including those for airplane industry and aerospace industry where greater added value can be expected.

What We Claim:

(1)  An automatic soldering method wherein soldering is conducted by lowering a soldering iron toward a work surface by means of an air cylinder, controlling both the preheating and heating times of the iron, supplying thread solder toward the soldering iron in a predetermined amount from a solder feeder installed separately in two steps as primary and secondary feeds at a timing synchronized with the lowering of said soldering iron, which is characterized in that the thread solder is supplied projecting slightly below the soldering iron so that it can be melted to wet the iron tip and heat the work surface while the iron is being lowered, and that the thread solder is supplied again during said secondary feed orienting to the end portion of the soldering iron which is wet from the primary feed so as to place the solder on the work surface.

(2)  An automatic soldering device comprising an air cylinder provided on a first base which is freely adjustable for its height relative to the work surface, a second base provided on a rod of said air cylinder which is freely movable vertically, and a vertically movable soldering iron attached to said second base, and a holder attached to said second base to support a thread solder feeding tube whose end acts as a solder nozzle in such a manner that they are retained near and directed toward the end portion of the soldering iron, said holder further retaining an adjustment means for the primary solder feed position which adjusts the vertical position of the solder nozzle relative to the end portion of the soldering iron so as to supply the thread solder at a location slightly below the end portion of the soldering iron, and an adjustment means for the secondary solder feed which enables the thread solder to be supplied at the end portion of the soldering iron.

FIG 1

# FIG 2

FIG 3

FIG 4

FIG 5

FIG 6

FIG 7

# INTERNATIONAL SEARCH REPORT

International Application No. PCT/JP85/00082

## I. CLASSIFICATION OF SUBJECT MATTER (if several classification symbols apply, indicate all) 3

According to International Patent Classification (IPC) or to both National Classification and IPC

Int. Cl$^4$ B23K 3/00, 3/06

## II. FIELDS SEARCHED

### Minimum Documentation Searched 4

| Classification System | Classification Symbols |
|---|---|
| IPC | B23K 3/00, 3/06 |

### Documentation Searched other than Minimum Documentation to the Extent that such Documents are Included in the Fields Searched 5

| | |
|---|---|
| Jitsuyo Shinan Koho | 1926 – 1985 |
| Kokai Jitsuyo Shinan Koho | 1971 – 1985 |

## III. DOCUMENTS CONSIDERED TO BE RELEVANT 14

| Category* | Citation of Document, 16 with indication, where appropriate, of the relevant passages 17 | Relevant to Claim No. 18 |
|---|---|---|
| A | JP, B2, 52-36853 (Matsushita Electric Industrial Co., Ltd.) 19 September 1977 (19. 09. 77) Column 1, line 17 to column 2, line 6 (Family : none) | 1, 2 |
| A | JP, A, 54-23056 (Hitachi, Ltd.) 21 February 1979 (21. 02. 79) Column 1, lines 4 to 8 (Family : none) | 1, 2 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| May 9, 1985 (09. 05. 85) | June 3, 1985 (03. 06. 85) |

| International Searching Authority 1 | Signature of Authorized Officer 20 |
|---|---|
| Japanese Patent Office | |

Form PCT/ISA/210 (second sheet) (October 1981)